# FASCICULE DE BREVET EUROPEEN

(11) **EP 3 516 304 B1**
(45) Date de publication et mention de la délivrance du brevet: **01.09.2021**
(21) Numéro de dépôt: 16787489.0
(22) Date de dépôt: 26.09.2016
(51) Int. Cl.: F24F 5/00, F28D 20/02, F28D 11/08, F28D 17/00, F28F 5/00, F28D 20/00

(54) **ÉCHANGEUR DE CHALEUR COMPRENANT AU MOINS UN MATÉRIAU À CHANGEMENT DE PHASE, PERMETTANT D'OPTIMISER ET DE MAITRISER LE TRANSFERT THERMIQUE**
WÄRMETAUSCHER MIT WENIGSTENS EINEM PHASENWECHSELMATERIAL, DAS DIE OPTIMIERUNG UND KONTROLLE DES WÄRMEAUSTAUSCHES ERLAUBT
HEAT EXCHANGER COMPRISING AT LEAST ONE PHASE-CHANGE MATERIAL, ALLOWING TO OPTIMIZE AND CONTROL THE HEAT TRANSFER

(43) Date de publication de la demande: 31.07.2019
(73) Titulaire: AMVALOR, 75013 Paris (FR); Nobatek, 64600 Anglet (FR)
(72) Inventeur: NADEAU, Jean Pierre, 33170 Gradignan (FR); BRUNEAU, Denis, 33650 La Brede (FR); LOPEZ, Jérôme, 33210 Saint Pardon De Conques (FR); BONNAMY, Paul, 33610 CESTAS (FR)
(74) Mandataire: Fantin, Laurent
(86) Numéro de dépôt international: PCT/FR2016/052436
(87) Numéro de publication internationale: WO 2018/055242

(56) Documents cités:
- EP-A1- 1 235 046
- DE-A1- 19 619 810
- DE-A1-102009 035 708
- JP-A- S59 134 494
- US-A- 4 285 389

## Description

L'invention se rapporte à un échangeur de chaleur comprenant au moins un matériau à changement de phase, permettant d'optimiser et de maîtriser le transfert thermique.

Les matériaux à changement de phase également appelé MCP sont des matériaux capables de changer de phase dans une plage de température restreinte. Ces matériaux à changement de phase sont notamment utilisés dans des échangeurs de chaleur, par exemple pour la climatisation ou le rafraichissement d'un bâtiment.

Selon un mode de réalisation, un matériau à changement de phase est encapsulé dans des contenants par exemple des tubes ou des plaques qui sont placés dans une enceinte traversée par un fluide. Chaque matériau à changement de phase se caractérise notamment par sa température de changement de phase qui est différente d'un matériau à l'autre. Pour les applications relatives à la climatisation ou le rafraichissement d'un bâtiment, les matériaux à changement de phase ont généralement une température de changement de phase comprise entre 0 et 30°C.

Le principe de fonctionnement d'un échangeur de chaleur traversé par un fluide et qui comprend un matériau à changement de phase est le suivant :
- Tant que la température du fluide reste au-dessous de la température de changement de phase, le matériau à changement de phase reste à l'état solide.
- Lorsque la température du fluide varie et dépasse la température de changement de phase, le matériau à changement de phase fond en absorbant une partie de l'énergie thermique du fluide. Ainsi, ce changement de phase permet de refroidir le fluide.
- Tant que la température du fluide reste au-dessus de la température de changement de phase, le matériau à changement de phase reste à l'état liquide.
- Lorsque la température du fluide varie et descend en dessous de la température de changement de phase, le matériau à changement de phase se solidifie en transférant une partie de l'énergie thermique vers le fluide. Ainsi, ce changement de phase permet de réchauffer le fluide.

Lorsque le fluide est de l'air prélevé à l'extérieur ou à l'intérieur d'un bâtiment pour être refoulé à l'intérieur ou à l'extérieur du bâtiment après avoir traversé l'échangeur de chaleur, ce dernier permet de réduire l'amplitude thermique à l'intérieur du bâtiment. Ainsi, durant la nuit le fluide entrant est réchauffé et le matériau à changement de phase se solidifie. Pendant la journée, en fondant, le matériau à changement de phase transmet l'énergie thermique emmagasinée la nuit au fluide, en le refroidissant.

Il existe de nombreuses publications qui décrivent de tels échangeurs de chaleur. Parmi ces dernières, on peut citer la demande de brevet WO2013/020583 ou la publication « Rafraîchissement d'air passif : Conception-dimensionnement-réalisation d'un échangeur air-matériau à changement de phase ». Un autre exemple est décrit dans le document DE 19619810 A1.

La nature et la quantité de matériau à changement de phase ainsi que le nombre, les dimensions et les orientations par rapport au flux du fluide des éléments contenant le matériau à changement de phase sont déterminés en fonction de chaque application pour optimiser le stockage de l'énergie et le transfert d'énergie entre le fluide et le matériau à changement de phase.

En fonctionnement, toutes ces caractéristiques sont fixes. Ainsi, les éléments contenant le matériau à changement de phase sont statiques et leurs orientations par rapport au flux du fluide sont figées.

Contrairement à la majorité des caractéristiques de l'échangeur de chaleur qui sont fixes, les caractéristiques du fluide peuvent évoluer au fil du temps. Ainsi, il est parfois nécessaire d'ajuster la température du fluide à la sortie de l'échangeur de chaleur.

Selon une première solution, il est possible de réguler la température du fluide en régulant le débit du fluide d'air qui traverse l'échangeur de chaleur. Toutefois, cette solution ne permet pas de maîtriser de manière précise la température du fluide à la sortie de l'échangeur de chaleur.

Selon une deuxième solution, il est possible de réguler la température du fluide en déviant une partie du fluide via un by-pass prévu en parallèle de l'échangeur de chaleur. Cependant, cette solution n'est pas satisfaisante car elle conduit à augmenter le volume occupé par l'installation et à la complexifier. De plus, elle ne permet pas d'obtenir une régulation précise.

Selon un premier objectif, l'invention vise à optimiser les performances d'un échangeur de chaleur contenant un matériau à changement de phase.

A cet effet, l'invention a pour objet un échangeur de chaleur comprenant au moins un conduit permettant de canaliser un flux de fluide et une pluralité d'éléments contenant au moins un matériau à changement de phase disposés dans ledit conduit. Selon l'invention, l'échangeur de chaleur se caractérise en ce qu'au moins certains des éléments contenant au moins un matériau à changement de phase sont reliés à au moins un support par l'intermédiaire d'articulations configurées pour permettre auxdits éléments contenant au moins un matériau à changement de phase de bouger librement dans le flux de fluide afin d'augmenter les perturbations du flux de fluide au contact des éléments.

Cette solution permet d'augmenter les échanges convectifs entre le matériau à changement de phase et le fluide. Les mouvements des éléments contenant au moins un matériau à changement de phase sont naturels et ne nécessitent pas d'apport d'énergie.

Selon l'invention, les éléments contenant au moins un matériau à changement de phase sont suspendus dans le conduit. Ils ont une longueur telle qu'ils s'étendent quasiment sur toute la hauteur du conduit.

Avantageusement, chaque articulation comprend au moins une rotation qui peut être une rotation avec un axe de rotation parallèle à la direction du flux de fluide et/ou une rotation avec un axe de rotation perpendiculaire à la direction du flux de fluide et à la direction verticale et/ou une rotation avec un axe de rotation perpendiculaire à la direction du flux de fluide et parallèle à la direction verticale.

Selon une autre caractéristique, au moins certains éléments contenant au moins un matériau à changement de phase comprennent au moins deux contenants élémentaires mis bout à bout et reliés entre eux par une articulation. Cette solution permet d'obtenir des mouvements plus amples et augmente les vitesses relatives entre les contenants et le fluide.

L'invention a également pour objet un échangeur de chaleur qui permet de mieux maîtriser les échanges thermiques. A cet effet, l'échangeur de chaleur comprend un système de réglage pour ajuster le positionnement des éléments contenant au moins un matériau à changement de phase dans le conduit.

Selon une configuration, les éléments contenant au moins un matériau à changement de phase sont orientés verticalement et agencés selon plusieurs colonnes perpendiculaires à la direction du flux de fluide et/ou selon plusieurs lignes parallèles à la direction du flux de fluide.

Selon l'invention, le système de réglage est configuré pour permettre :
- le réglage du pas entre chaque colonne, et/ou
- le réglage du pas entre chaque ligne, et/ou
- un décalage des colonnes les unes par rapport aux autres, et/ou
- un décalage des lignes les unes par rapport aux autres.

La variation d'écartement entre les éléments contenant au moins un matériau à changement de phase permet de réguler les échanges convectifs, les pertes de charge de l'échangeur, la température de sortie de l'échangeur. Elle permet également de faire varier la compacité de l'échangeur et/ou de modifier le taux de matériau à changement de phase dans l'échangeur.

Le décalage des colonnes ou des lignes permet de passer d'un arrangement carré ou rectangulaire à un arrangement en quinconce ce qui permet de pouvoir réguler les échanges thermiques et les pertes de charge.

Selon une autre caractéristique, les éléments contenant au moins un matériau à changement de phase sont suspendus à au moins un tronçon du conduit et/ou à un support montés pivotant autour d'un axe de rotation :
- parallèle à la direction du flux de fluide, ou
- perpendiculaire à la direction du flux de fluide et à la verticale.

Cette solution permet de pouvoir moduler les échanges thermiques et les pertes de charge de l'échangeur. De plus, elle permet d'écarter les éléments contenant au moins un matériau à changement de phase d'une paroi. Cet écartement va favoriser le passage du flux de fluide et générer un phénomène de by-pass.

Selon une autre caractéristique, les éléments contenant au moins un matériau à changement de phase sont suspendus à un support monté pivotant autour d'un axe de rotation parallèle à la direction verticale. Cette solution permet de modifier la face des éléments contenant au moins un matériau à changement de phase soumise à la plus forte intensité d'échange.

D'autres caractéristiques et avantages ressortiront de la description qui va suivre de l'invention, description donnée à titre d'exemple uniquement, en regard des dessins annexés sur lesquels :
- La figure 1 est une vue de côté d'un échangeur de chaleur qui illustre une première variante de l'invention,
- La figure 2 est une vue de côté d'un échangeur de chaleur qui illustre une deuxième variante de l'invention,
- La figure 3 est une vue de face de l'échangeur de chaleur visible sur la figure 1,
- La figure 4A est une vue de dessus d'un échangeur de chaleur selon l'invention qui illustre un premier agencement des éléments contenant un matériau à changement de phase,
- La figure 4B est une vue de dessus de l'échangeur de chaleur de la figure 4A qui illustre un premier réglage de la position des éléments contenant un matériau à changement de phase,
- La figure 4C est une vue de dessus de l'échangeur de chaleur de la figure 4A qui illustre un second réglage de la position des éléments contenant un matériau à changement de phase,
- La figure 5A est une vue de dessus d'un échangeur de chaleur selon l'invention,
- La figure 5B est une vue de dessus de l'échangeur de chaleur de la figure 5A qui illustre un troisième réglage de la position des éléments contenant un matériau à changement de phase,
- La figure 6A est une vue de face d'un échangeur de chaleur selon l'invention,
- La figure 6B est une vue de face de l'échangeur de chaleur de la figure 6A qui illustre un quatrième réglage de la position des éléments contenant un matériau à changement de phase,
- La figure 7 est une vue de face illustrant en détails une liaison entre un support et un conduit.

Sur les différentes figures, on a représenté de manière schématique un échangeur de chaleur 10 configuré pour assurer un transfert d'énergie thermique entre un fluide 12 et au moins un matériau à changement de phase 14.

Pour la suite de la description, l'expression un ou le matériau à changement de phase signifie au moins un matériau à changement de phase. Selon un mode de réalisation, le matériau à changement de phase est choisi parmi les paraffines ayant une température de fusion comprise entre 20 et 30°C.

Selon un mode de réalisation, le fluide 12 est un gaz et plus particulièrement de l'air. Selon une application, l'échangeur de chaleur 10 permet de réguler la température de l'air capté à l'extérieur d'un bâtiment et refoulé à l'intérieur du bâtiment et/ou capté à l'intérieur d'un bâtiment et refoulé à l'extérieur du bâtiment et/ou capté à l'intérieur d'un bâtiment et refoulé à l'intérieur du bâtiment. Ainsi, il est possible d'obtenir un système de rafraîchissement passif de l'air.

Bien entendu, l'invention n'est pas limitée à ce fluide ou à cette application.

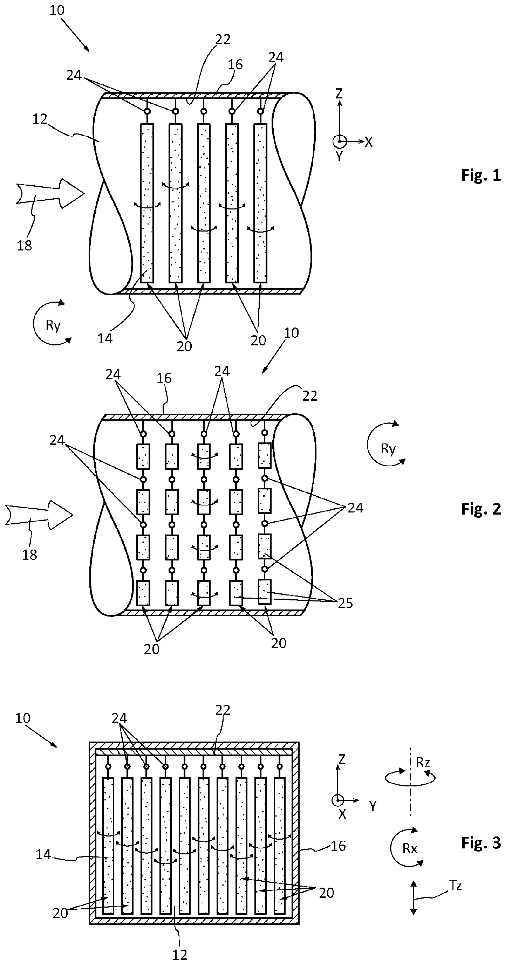

L'échangeur de chaleur comprend au moins un conduit 16 qui permet de canaliser un flux de fluide matérialisé par une flèche 18 sur les figures 1, 2, 4A à 4C, 5A et 5B. Ce conduit 16 comprend au moins une paroi.

Selon un mode de réalisation, le conduit 16 a une section carrée ou rectangulaire et comprend quatre parois. Cependant, d'autres sections sont envisageables pour le conduit 16.

Pour la suite de la description, l'échangeur de chaleur 10 est fixe dans un référentiel noté XYZ. La direction Z correspond à la direction verticale.

Pour simplifier les figures, les parois du conduit sont parallèles à la direction X. Ainsi, le flux 18 de fluide est parallèle à la direction X.

L'échangeur de chaleur 10 comprend une pluralité d'éléments 20 contenant un matériau à changement de phase, disposés dans le conduit 16. Pour la suite de la description, un élément 20 contenant le matériau à changement de phase est appelé un contenant de MCP 20.

Avantageusement, l'échangeur de chaleur 10 comprend au moins cinquante contenants de MCP 20. De préférence, l'échangeur de chaleur 10 comprend au moins cent contenants de MCP 20.

Selon un premier mode de réalisation illustré sur la figure 1, un contenant de MCP 20 est un tube rectiligne creux fermé à chacune de ses extrémités. Selon un deuxième mode de réalisation illustré sur la figure 2, un contenant de MCP 20 comprend plusieurs tubes rectilignes creux mis bout à bout, chaque tube étant fermé à chacune de ses extrémités.

De préférence, le contenant de MCP 20 a une section circulaire et un diamètre compris entre 5 et 50 mm Cependant, d'autres sections avec d'autres dimensions sont envisageables.

Les contenants de MCP sont réalisés en un matériau favorisant les échanges thermiques entre le matériau à changement de phase et le fluide.

De plus, l'épaisseur du contenant de MCP doit être la plus faible possible pour favoriser les échanges thermiques entre le matériau à changement de phase et le fluide.

Selon un mode de réalisation, le contenant de MCP 20 est en polyéthylène. Toutefois, d'autres matériaux sont envisageables.

Quelle que soit la variante, un contenant de MCP 20 comprend au moins une enveloppe qui peut être souple ou rigide.

Selon un agencement privilégié, chaque contenant de MCP 20 est longiligne et sa plus grande dimension est orientée selon une direction perpendiculaire au flux 18 de fluide. De plus, les contenants de MCP 20 ont une longueur telle qu'ils s'étendent quasiment d'une paroi à l'autre du conduit.

Selon une caractéristique de l'invention, les contenants de MCP 20 sont mobiles par rapport au conduit 16.

Avantageusement, au moins certains contenant de MCP 20, et de préférence tous, sont reliés à au moins un support 22 par l'intermédiaire d'articulations 24 (une pour chaque contenant) qui permettent auxdits contenants de MCP 20 de bouger librement. Ainsi, lorsqu'un flux 18 de fluide s'écoule entre les contenants de MCP 20, ces derniers bougent librement grâce aux articulations 24. Les articulations 24 sont configurées de manière à limiter la résistance aux mouvements des contenants de MCP 20 qui doivent pouvoir bouger librement de manière aléatoire lorsque le flux 18 de fluide s'écoule entre les contenants de MCP 20. Ainsi, les contenants de MCP 20 grâce à leurs mouvements libres perturbent le flux 18 de fluide ce qui tend à augmenter les échanges entre le flux 18 de fluide et les contenants de MCP 20.

Selon l'invention, le mouvement des contenants de MCP 20 découle de la combinaison du flux 18 de fluide et des articulations 24.

Cette solution permet d'optimiser le transfert thermique en augmentant les échanges convectifs entre le matériau à changement de phase 14 et le fluide 12 grâce d'une part au brassage du matériau à changement de phase 14 dans les contenants de MCP 20, et d'autre part, à l'augmentation des perturbations du flux 18 de fluide au contact des contenants de MCP 20. Selon un autre avantage, les mouvements des contenants de MCP 20 sont naturels et ne nécessitent pas d'apport d'énergie.

De préférence, les mouvements des contenants de MCP 20 sont aléatoires. Le caractère aléatoire des mouvements provient du fait que les contenants de MCP 20 ne sont pas parfaitement alignés et/ou le flux n'est pas régulier et laminaire sur toute la section du conduit.

Selon une configuration privilégiée, les contenants de MCP 20 sont suspendus et leurs extrémités supérieures sont reliées au support 22 par l'intermédiaire des articulations 24, ledit support 22 étant positionné en partie supérieure ou au-dessus du conduit 16.

A flux constant, cette configuration permet d'augmenter l'amplitude des mouvements des contenants de MCP 20.

Selon un mode de réalisation simplifié, le conduit 16 assure la fonction de support 22.

Selon une première variante illustrée sur la figure 1, chaque contenant de MCP 20 comprend un unique contenant. Cette solution a pour avantage d'être simple, d'offrir une meilleure compacité et améliore les échanges internes au matériau à changement de phase.

Selon une autre variante illustrée sur la figure 2, au moins certains contenants de MCP 20, et de préférence tous, comprennent au moins deux contenants élémentaires 25 mis bout à bout. Cette solution permet d'utiliser plusieurs matériaux à changement de phase.

Selon un premier mode de réalisation, les contenants élémentaires 25 sont reliés entre eux par des liaisons rigides. Selon un autre mode de réalisation visible sur la figure 2, les contenants élémentaires 25 adjacents sont reliés par une articulation 24 si bien que lesdits contenants élémentaires 25 sont mobiles entre eux. Cette solution permet d'obtenir des mouvements plus amples et augmente les vitesses relatives entre les contenants et le fluide.

Avantageusement, l'articulation 24 est configurée pour autoriser au moins un mouvement de rotation.

Selon un mode de réalisation, l'articulation 24 est configurée pour autoriser uniquement un mouvement de rotation Rz selon un axe parallèle à la direction Z. Cette configuration permet d'homogénéiser le changement de phase du matériau 14 sur tout le pourtour du contenant de MCP 20. De plus, dans le cas d'un contenant de MCP 20 avec une section non cylindrique, ce mouvement de rotation Rz va accroître les perturbations du flux 18 de fluide ce qui va contribuer à augmenter les échanges convectifs entre le matériau à changement de phase et le fluide.

Selon un autre mode de réalisation, l'articulation 24 est configurée pour autoriser uniquement un mouvement de rotation Rx selon un axe parallèle à la direction X, soit parallèle à la direction du flux 18 de fluide. Cette configuration va permettre d'accroître les échanges convectifs entre le matériau à changement de phase et le fluide.

Selon un autre mode de réalisation, l'articulation 24 est configurée pour autoriser uniquement un mouvement de rotation Ry selon un axe parallèle à la direction Y, soit perpendiculaire à la direction du flux 18 de fluide. Cette configuration va permettre d'accroître les échanges convectifs entre le matériau à changement de phase et le fluide.

Selon un mode de réalisation, chaque articulation 24 est une liaison rotule. Cette configuration limite l'apparition d'un phénomène de by-pass.

En variante, chaque articulation 24 est une combinaison des articulations Rx et/ou Ry et/ou Rz.

Bien entendu, l'invention n'est pas limitée à ce type d'articulation. Ainsi, l'articulation 24 peut autoriser d'autres mouvements, comme par exemple un mouvement de translation oscillant selon la direction Tz parallèle à l'axe Z.

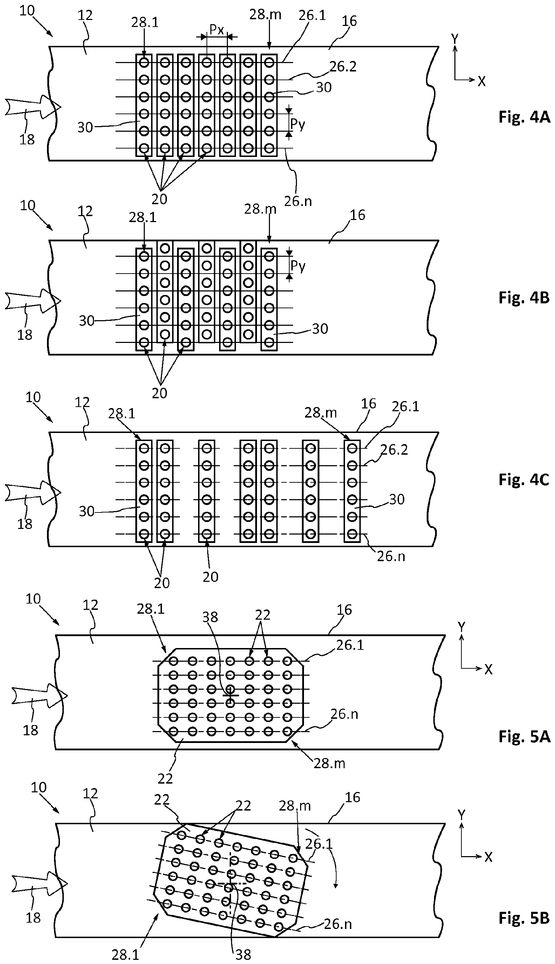

Selon une configuration illustrée sur les figures 4A, 5A, 6A, les contenants de MCP 20 sont agencés selon plusieurs lignes 26.1 à 26.n (n étant un entier correspondant au nombre de lignes) et/ou selon plusieurs colonnes 28.1 à 28.m (m étant un entier correspondant au nombre de colonnes). Les lignes 26.1 à 26.n sont parallèles à la direction X et les colonnes 28.1 à 28.m sont parallèles à la direction Y.

Pour une même ligne, les contenants de MCP 20 sont répartis avec un premier pas Px.

Pour une même colonne, les contenants de MCP 20 sont répartis avec un second pas Py.

Le second pas Py ne doit pas être inférieur ou égal à 1,25 fois le diamètre des tubes contenant le MCP pour ne pas trop augmenter les pertes de charge.

Le second pas Py ne doit pas être supérieur ou égal à 2 à 3 fois le diamètre des tubes contenant le MCP pour obtenir les effets recherchés.

Le premier pas Px doit être compris entre 1,1 fois le diamètre des tubes contenant le MCP et 5 à 6 fois ledit diamètre pour obtenir les effets recherchés.

Pour chaque colonne, la distance séparant le premier contenant de MCP d'une première paroi et/ou la distance séparant le dernier contenant de MCP d'une deuxième paroi doivent être comprises dans une plage donnée, entre 0,55 fois le diamètre des tubes contenant le MCP et 5 à 6 fois ledit diamètre pour permettre aux contenants de MCP 20 de bouger librement et pour limiter le passage du flux 18 de fluide contre les parois ou pour permettre un by-pass.

Selon un mode de réalisation, les pas Px et Py sont fixes et ne peuvent pas être modifiés au cours du temps.

Selon une caractéristique de l'invention, l'échangeur de chaleur 10 comprend un système de réglage pour ajuster le positionnement des contenants de MCP 20 par rapport au conduit 16. Grâce à cette caractéristique, il est possible de mieux maîtriser les échanges thermiques et de mieux réguler certains paramètres du flux de fluide en sortie de l'échangeur comme par exemple sa température, son débit.

Selon une première variante, l'échangeur de chaleur 10 comprend un système pour régler au moins un des deux pas Px et/ou Py, plus particulièrement le pas Px.

Selon une autre variante, l'échangeur de chaleur 10 comprend un système pour décaler les colonnes les unes par rapport aux autres. Ainsi, les contenants de MCP 20 ne sont plus disposés selon des lignes comme illustré sur la figure 4B.

Selon une autre variante, l'échangeur de chaleur 10 comprend un système pour décaler les lignes les unes par rapport aux autres. Ainsi, les contenants de MCP 20 ne sont plus alignés selon des colonnes.

Selon un mode de réalisation, les contenants de MCP 20 d'une même colonne sont reliés à un même support 30. L'échangeur de chaleur comprend de préférence autant de supports 30 que de colonnes 28.1 à 28.m. Selon une configuration, pour chaque support 30, le pas Py est fixe et constant. Ainsi, les contenants de MCP 20 d'un même support 30 sont régulièrement espacés.

Au moins un support 30 est relié au conduit 16 par une liaison non permanente qui permet de modifier la position du support 30 par rapport au conduit 16.

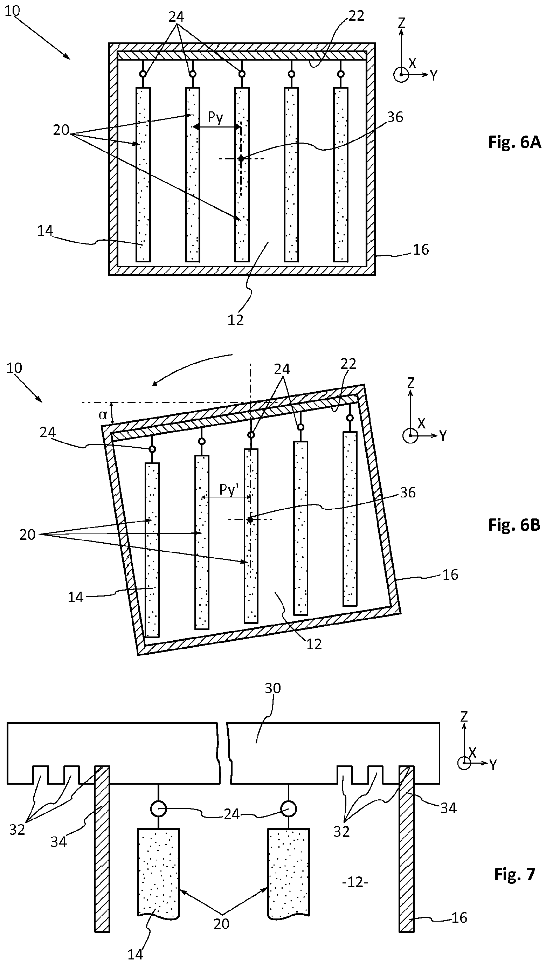

Comme illustré sur la figure 7, chaque support 30 se présente sous la forme d'une barrette avec à chacune de ses extrémités des encoches 32 qui coopèrent avec deux glissières 34 solidaires du conduit 16.

Selon ce mode de réalisation, il est possible de modifier la position de chaque barrette selon la direction Y en changeant d'encoches. De la sorte, les colonnes peuvent être décalées les unes par rapport aux autres, comme illustré sur la figure 4B.

Selon ce mode de réalisation, il est possible de modifier la position de chaque barrette selon la direction X en faisant glisser la barrette le long des glissières 34. De la sorte, le pas Px peut être modifié entre les différentes colonnes, comme illustré sur la figure 4C.

Bien entendu, l'invention n'est pas limitée au mode de réalisation visible sur la figure 7 pour modifier les positions des contenants de MCP 20.

Selon une autre variante, l'échangeur de chaleur 10 comprend un système pour régler le pas Py.

Selon un mode de réalisation illustré sur les figures 6A et 6B, le conduit 16 et/ou le support 22 sont montés pivotant autour d'un axe de rotation 36 parallèle à la direction X (soit parallèle au flux 18 de fluide). Cette solution permet de pouvoir ajuster simultanément le pas entre toutes les lignes. De plus, elle permet de générer un espacement plus important d'un côté des contenants de MCP 20 qui va favoriser le passage du flux de fluide et générer un phénomène de by-pass.

De préférence, le support 22 est relié à un tronçon du conduit 16 qui peut pivoter par rapport au reste du conduit 16.

Comme illustré sur la figure 6A, les contenants de MCP 20 sont suspendus et espacés avec un pas Py. Après pivotement, comme illustré sur la figure 6B, les contenants de MCP20 sont espacés avec un pas Py' égal à Py/cosα, a étant l'angle de rotation du support 22 et/ou du conduit 16.

Selon une autre variante, l'échangeur de chaleur 10 comprend un système pour modifier l'orientation des lignes 26.1 à 16.n et des colonnes 28.1 à 28.m par rapport à la direction du flux 18 de fluide.

Selon un mode de réalisation illustré sur les figures 5A et 5B, les contenants de MCP 20 sont reliés à un support 22 qui est relié au conduit 16 par une liaison configurée de manière à permettre au support 22 de pivoter selon un axe de rotation 38 parallèle à l'axe Z.

Ainsi, comme illustré sur la figure 5A, les lignes 26.1 à 26.n sont parallèles avec la direction du flux 18 de fluide. Après pivotement du support 22 autour de l'axe de rotation 38, les lignes 26.1 à 26.n ne sont plus parallèles à la direction du flux 18 de fluide.

Selon un autre mode de réalisation, le conduit 16 et/ou le support 22 sont montés pivotant autour d'un axe de rotation parallèle à la direction Y (soit perpendiculaire au flux 18 de fluide et à la verticale). Cette solution permet de pouvoir ajuster simultanément le pas entre toutes les colonnes. De plus, elle permet de générer un espacement plus important sous les contenants de MCP 20 qui va favoriser le passage du flux de fluide et générer un phénomène de by-pass.

Les différentes variantes présentées ci-dessus peuvent être mises en œuvre indépendamment les unes des autres ou être combinées.

De préférence, les différents systèmes de réglages de la position des contenants de MCP20 peuvent être activés lors du fonctionnement de l'échangeur de chaleur. Il n'est pas nécessaire de stopper l'écoulement du flux 18 de fluide ou de démonter l'échangeur.

Avantageusement, les différents systèmes de réglages sont automatisés grâce à des actionneurs.

## Revendications

1. Echangeur de chaleur comprenant au moins un conduit (16) permettant de canaliser un flux (18) de fluide et une pluralité d'éléments (20) contenant au moins un matériau à changement de phase disposés dans ledit conduit (16), **caractérisé en ce qu'**au moins certains desdits éléments (20) contenant au moins un matériau à changement de phase sont suspendus à un support (22), leurs extrémités supérieures étant reliées au support (22) par l'intermédiaire d'articulations (24) configurées pour permettre auxdits éléments (20) contenant au moins un matériau à changement de phase de bouger librement dans le flux (18) de fluide afin d'augmenter les perturbations du flux (18) de fluide au contact des éléments (20), ledit support (22) étant positionné en partie supérieure ou au-dessus du conduit (16).

2. Echangeur de chaleur selon la revendication 1, **caractérisé en ce que** chaque élément (20) contenant au moins un matériau à changement de phase est longiligne et a une longueur telle qu'il s'étend quasiment d'une paroi à l'autre du conduit (16).

3. Echangeur de chaleur selon l'une des revendications précédentes, **caractérisé en ce que** chaque articulation (24) comprend au moins une rotation.

4. Echangeur selon la revendication 3, **caractérisé en ce que** la rotation est une rotation (Rx) avec un axe de rotation parallèle à la direction du flux (18) de fluide et/ou une rotation (Ry) avec un axe de rotation perpendiculaire à la direction du flux (18) de fluide et à la direction verticale et/ou une rotation (Rz) avec un axe de rotation perpendiculaire à la direction du flux (18) de fluide et parallèle à la direction verticale.

5. Echangeur de chaleur selon l'une des revendications précédentes, **caractérisé en ce qu'**au moins certains éléments (20) contenant au moins un matériau à changement de phase comprennent au moins deux contenants élémentaires (25) mis bout à bout et reliés entre eux par une articulation (24).

6. Echangeur de chaleur selon l'une des revendications précédentes, **caractérisé en ce qu'**il comprend un système de réglage pour ajuster le positionnement des éléments (20) contenant au moins un matériau à changement de phase dans le conduit (16).

7. Echangeur de chaleur selon la revendication 6, **caractérisé en ce que** les éléments (20) contenant au moins un matériau à changement de phase sont orientés verticalement et agencés selon plusieurs colonnes (28.1 à 28.m) perpendiculaires à la direction du flux (18) de fluide et **en ce que** le système de réglage est configuré pour permettre le réglage du pas (Px) entre chaque colonne (28.1 à 28.m).

8. Echangeur de chaleur selon la revendication 6 ou 7, **caractérisé en ce que** les éléments (20) contenant au moins un matériau à changement de phase sont orientés verticalement et agencés selon plusieurs colonnes (28.1 à 28.m) perpendiculaires à la direction du flux (18) de fluide et **en ce que** le système de réglage est configuré pour permettre un décalage des colonnes les unes par rapport aux autres.

9. Echangeur de chaleur selon la revendication 7 ou 8, **caractérisé en ce que** les éléments (20) contenant au moins un matériau à changement de phase d'une même colonne sont reliés à un même support (30), au moins un support (30) étant relié au conduit (16) par une liaison non permanente qui permet de modifier la position du support (30) par rapport au conduit (16).

10. Echangeur de chaleur selon l'une des revendications 6 à 9, **caractérisé en ce que** les éléments (20) contenant au moins un matériau à changement de phase sont orientés verticalement et agencés selon plusieurs lignes (26.1 à 26.n) parallèles à la direction du flux (18) de fluide et **en ce que** le système de réglage est configuré pour permettre un décalage des lignes les unes par rapport aux autres.

11. Echangeur de chaleur selon l'une des revendications 6 à 10, **caractérisé en ce que** les éléments (20) contenant au moins un matériau à changement de phase sont orientés verticalement et agencés selon plusieurs lignes (26.1 à 26.n) parallèles à la direction du flux (18) de fluide et **en ce que** le système de réglage est configuré pour permettre le réglage du pas (Py) entre chaque ligne (26.1 à 26.n).

12. Echangeur de chaleur selon l'une des revendications 6 à 11, **caractérisé en ce que** les éléments (20) contenant au moins un matériau à changement de phase sont suspendus à au moins un tronçon du conduit (16) et/ou à un support (22) montés pivotant autour d'un axe de rotation (36) parallèle à la direction du flux (18) de fluide.

13. Echangeur de chaleur selon l'une des revendications 6 à 12, **caractérisé en ce que** les éléments (20) contenant au moins un matériau à changement de phase sont suspendus à au moins un tronçon du conduit (16) et/ou à un support (22) montés pivotant autour d'un axe de rotation perpendiculaire à la direction du flux (18) de fluide et à la verticale.

14. Echangeur de chaleur selon l'une des revendications 6 à 13, **caractérisé en ce que** les éléments (20) contenant au moins un matériau à changement de phase sont suspendus à un support (22) monté pivotant autour d'un axe de rotation (38) parallèle à la direction verticale.

## Patentansprüche

1. Wärmetauscher mit wenigstens einem Kanal (16) zum Leiten eines Fluidstroms (18) und mehreren Elementen (20), die wenigstens ein Phasenwechselmaterial enthalten und die in dem Kanal (16) angeordnet sind, **dadurch gekennzeichnet, dass** wenigstens einige der Elemente (20), die wenigstens ein Phasenwechselmaterial enthalten, an einem Träger (22) aufgehängt sind, wobei ihre oberen Enden mit dem Träger (22) durch Gelenke (24) verbunden sind, die so eingerichtet sind, dass sich die Elemente (20), die wenigstens ein Phasenwechselmaterial enthalten, frei im Fluidstrom (18) bewegen können, um Störungen des Fluidstroms (18) beim Kontakt mit den Elementen (20) zu erhöhen, wobei der Träger (22) im oberen Teil oder über dem Kanal (16) angeordnet ist.

2. Wärmetauscher nach Anspruch 1, **dadurch gekennzeichnet, dass** jedes Element (20), das wenigstens ein Phasenwechselmaterial enthält, langgestreckt ist und eine derartige Länge hat, dass es sich gewissermaßen von einer Wand zur anderen Wand des Kanals (16) erstreckt.

3. Wärmetauscher nach einem der vorhergehenden Ansprüche, **dadurch gekennzeichnet, dass** jedes Gelenk (24) wenigstens eine Drehmöglichkeit aufweist.

4. Wärmetauscher nach Anspruch 3, **dadurch gekennzeichnet, dass** die Drehmöglichkeit eine Rotation (Rx) mit einer Drehachse parallel zur Strömungsrichtung (18) des Fluids ist und/oder eine Rotation (Ry) mit einer Drehachse im rechten Winkel zur Strömungsrichtung (18) des Fluids und zur vertikalen Richtung ist und/oder einer Rotation (Rz) mit einer Drehachse im rechten Winkel zur Strömungsrichtung (18) des Fluids und parallel zur vertikalen Richtung ist.

5. Wärmetauscher nach einem der vorhergehenden Ansprüche, **dadurch gekennzeichnet, dass** wenigstens einige Elemente (20), die wenigstens ein Phasenwechselmaterial enthalten, wenigstens zwei Elementarbehälter (25) umfassen, die aneinandergereiht sind und untereinander durch ein Gelenk (24) verbunden sind.

6. Wärmetauscher nach einem der vorhergehenden Ansprüche, **dadurch gekennzeichnet, dass** dieser ein Einstellsystem umfasst, um die Lage der Elemente (20), die wenigstens ein Phasenwechselmaterial enthalten, im Kanal (16) einzustellen.

7. Wärmetauscher nach Anspruch 6, **dadurch gekennzeichnet, dass** die wenigstens ein Phasenwechselmaterial enthaltenden Elemente (20) vertikal ausgerichtet und in mehreren Spalten (28.1 bis 28.m) im rechten Winkel zur Strömungsrichtung (18) des Fluids angeordnet sind und dass das Einstellsystem so eingerichtet ist, dass es jeweils die Einstellung des Abstands (Px) zwischen den Säulen (28.1 bis 28.m) ermöglicht.

8. Wärmetauscher nach Anspruch 6 oder 7, **dadurch gekennzeichnet, dass** die wenigstens ein Phasenwechselmaterial enthaltenden Elemente (20) vertikal ausgerichtet und in mehreren Spalten (28.1 bis 28.m) im rechten Winkel zur Strömungsrichtung des Fluids (18) angeordnet sind und dass das Einstellsystem so eingerichtet ist, dass es einen Versatz der Spalten relativ zueinander ermöglicht.

9. Wärmetauscher nach Anspruch 7 oder 8, **dadurch gekennzeichnet, dass** die wenigstens ein Phasenwechselmaterial enthaltenden Elemente (20) derselben Spalte mit demselben Träger (30) verbunden sind, wobei wenigstens ein Träger (30) mit dem Kanal (16) durch eine nicht dauerhafte Verbindung verbunden ist, die es ermöglicht, die Lage des Trägers (30) relativ zum Kanal (16) zu verändern.

10. Wärmetauscher nach einem der Ansprüche 6 bis 9, **dadurch gekennzeichnet, dass** die wenigstens ein Phasenwechselmaterial enthaltenden Elemente (20) vertikal ausgerichtet und entlang mehrerer Zeilen (26.1 bis 26.n) parallel zur Strömungsrichtung des Fluids (18) angeordnet sind und dass das Einstellsystem so eingerichtet ist, dass es einen Versatz der Zeilen relativ zueinander ermöglicht.

11. Wärmetauscher nach einem der Ansprüche 6 bis 10, **dadurch gekennzeichnet, dass** die wenigstens ein Phasenwechselmaterial enthaltenden Elemente (20) vertikal ausgerichtet und entlang mehrerer Zeilen (26.1 bis 26.n) parallel zur Strömungsrichtung des Fluids (18) angeordnet sind und dass das Einstellsystem so eingerichtet ist, dass es die Einstellung des Abstands (Py) zwischen jeder Zeile (26.1 bis 26.n) ermöglicht.

12. Wärmetauscher nach einem der Ansprüche 6 bis 11, **dadurch gekennzeichnet, dass** die wenigstens ein Phasenwechselmaterial enthaltenden Elemente (20) an wenigstens einem Abschnitt des Kanals (16) aufgehängt und/oder an einem Träger (22) angebracht sind, der um eine Drehachse (36) parallel zur Strömungsrichtung (18) des Fluids verschwenkbar montiert ist.

13. Wärmetauscher nach einem der Ansprüche 6 bis 12, **dadurch gekennzeichnet, dass** die wenigstens ein Phasenwechselmaterial enthaltenden Elemente (20) an wenigstens einem Abschnitt des Kanals (16) aufgehängt und/oder an einem Träger (22) angebracht sind, der um eine Drehachse im rechten Winkel zur Strömungsrichtung (18) des Fluids und um die Senkrechte verschwenkbar montiert ist.

14. Wärmetauscher nach einem der Ansprüche 6 bis 13, **dadurch gekennzeichnet, dass** die wenigstens ein Phasenwechselmaterial enthaltenden Elemente (20) an einem Träger (22) aufgehängt sind, der um eine zur Senkrechten parallele Drehachse (38) schwenkbar montiert ist.

## Claims

1. Heat exchanger comprising at least one duct (16) for channelling a flow (18) of fluid and a plurality of elements (20) containing at least one phase-change material that are disposed in said duct (16), **characterized in that** at least some of said elements (20) containing at least one phase-change material are suspended on a support (22), their upper ends being connected to the support (22) by way of articulations (24) configured to allow said elements (20) containing at least one phase-change material to move freely in the flow (18) of fluid in order to increase the disturbance of the flow (18) of fluid in contact with the elements (20), said support (22) being positioned in the upper part or at the top of the duct (16).

2. Heat exchanger according to Claim 1, **characterized in that** each element (20) containing at least one phase-change material is elongate and has a length such that it extends virtually from one wall of the duct (16) to the other.

3. Heat exchanger according to either of the preceding claims, **characterized in that** each articulation (24) comprises at least one rotation.

4. Exchanger according to Claim 3, **characterized in that** the rotation is a rotation (Rx) with an axis of rotation parallel to the direction of the flow (18) of fluid and/or a rotation (Ry) with an axis of rotation perpendicular to the direction of the flow (18) of fluid and to the vertical direction and/or a rotation (Rz) with an axis of rotation perpendicular to the direction of the flow (18) of fluid and parallel to the vertical direction.

5. Heat exchanger according to one of the preceding claims, **characterized in that** at least some elements (20) containing at least one phase-change material comprise at least two elementary containers (25) that are placed end to end and are connected together by an articulation (24) .

6. Heat exchanger according to one of the preceding claims, **characterized in that** it comprises an adjustment system for adjusting the position of the elements (20) containing at least one phase-change material in the duct (16) .

7. Heat exchanger according to Claim 6, **characterized in that** the elements (20) containing at least one phase-change material are oriented vertically and arranged in a plurality of columns (28.1 to 28.m) perpendicular to the direction of the flow (18) of fluid, and **in that** the adjustment system is configured to allow the adjustment of the spacing (Px) between each column (28.1 to 28.m).

8. Heat exchanger according to Claim 6 or 7, **characterized in that** the elements (20) containing at least one phase-change material are oriented vertically and arranged in a plurality of columns (28.1 to 28.m) perpendicular to the direction of the flow (18) of fluid, and **in that** the adjustment system is configured to allow the columns to be offset with respect to one another.

9. Heat exchanger according to Claim 7 or 8, **characterized in that** the elements (20) containing at least one phase-change material in one and the same column are connected to one and the same support (30), at least one support (30) being connected to the duct (16) by a non-permanent connection that makes it possible to modify the position of the support (30) with respect to the duct (16).

10. Heat exchanger according to one of Claims 6 to 9, **characterized in that** the elements (20) containing at least one phase-change material are oriented vertically and arranged in a plurality of rows (26.1 to 26.n) parallel to the direction of the flow (18) of fluid, and **in that** the adjustment system is configured to allow the rows to be offset with respect to one another.

11. Heat exchanger according to one of Claims 6 to 10, **characterized in that** the elements (20) containing at least one phase-change material are oriented vertically and arranged in a plurality of rows (26.1 to 26.n) parallel to the direction of the flow (18) of fluid, and **in that** the adjustment system is configured to allow the adjustment of the spacing (Py) between each row (26.1 to 26.n) .

12. Heat exchanger according to one of Claims 6 to 11, **characterized in that** the elements (20) containing at least one phase-change material are suspended on at least one portion of the duct (16) and/or on a support (22) which are mounted so as to pivot about an axis of rotation (36) parallel to the direction of the flow (18) of fluid.

13. Heat exchanger according to one of Claims 6 to 12, **characterized in that** the elements (20) containing at least one phase-change material are suspended on at least one portion of the duct (16) and/or on a support (22) which are mounted so as to pivot about an axis of rotation perpendicular to the direction of the flow (18) of fluid and to the vertical.

14. Heat exchanger according to one of Claims 6 to 13, **characterized in that** the elements (20) containing at least one phase-change material are suspended on a support (22) which is mounted so as to pivot about an axis of rotation (38) parallel to the vertical direction.
